# EUROPEAN PATENT SPECIFICATION

(11) **EP 2 174 762 B1**
(45) Date of publication and mention of the grant of the patent: **13.08.2014**
(21) Application number: 09171792.6
(22) Date of filing: 30.09.2009
(51) Int. Cl.: B28D 1/22, B28D 5/00

(54) **Method for scribing bonded substrates**
Verfahren zum Anreißen verbundener Substrate
Procédé pour gravure sur des substrats liés

(30) Priority: 10.10.2008 JP 2008264523
(43) Date of publication of application: 14.04.2010
(73) Proprietor: Mitsuboshi Diamond Industrial Co., Ltd., Suita-city, Osaka 564-0044 (JP)
(72) Inventor: Kawabata, Takashi, Suita-city, Osaka 564-0044 (JP); Sakaguchi, Ryota, Suita-city, Osaka 564-0044 (JP)
(74) Representative: TBK

(56) References cited:
- JP-A- 6 048 755
- US-A1- 2004 123 717
- US-A1- 2004 141 145

## Description

### [Technical Field]

The present invention relates to a method for scribing bonded substrates made of a brittle material using a scribing wheel. Here, the brittle material includes glass substrates, such as FPD's, and those for portable communication apparatuses, ceramics, single crystal silicon, semiconductor wafers and sapphire.

### [Background Technology]

US20040123717A1 shows a method for scribing bonded substrates, where a substrate to be processed has a substrate structure where a first substrate and a second substrate are bonded together with a sealing material so that a number of products are formed in locations respectively including a sealing material in said substrate structure and an end material region is formed between adjacent products, according to which scribe lines are created in a first and second substrate along which products are cut out using a scribing wheel, comprising the steps of:
- creating a scribe line to be used for cutting a product on a first substrate side in the first substrate;
- next, creating a scribe line to be used for cutting a product on a second substrate side in the second substrate where the first and second substrate are turned upside-down.

Some products using a glass substrate are manufactured by cutting out the products from a bonded substrate. For example, liquid crystal display panels have a structure where a color filter is formed on one substrate and TFT's (thin film transistors) for driving the liquid crystal are formed on the other substrate, and the two substrates are bonded together with liquid crystal in between. Such liquid crystal display panels are manufactured by forming a number of unit display panels, each of which is to become a liquid crystal display panel, in a bonded substrate (mother substrate) having a large area, and cutting out the respective unit display panels (see Patent Document 1).
[Patent Document 1] Japanese Unexamined Patent Publication H06 (1994)-48755also represents prior art.

### [Disclosure of the Invention]

### [Problem to Be Solved by the Invention]

In general bonded substrates, a first substrate and a second substrate are bonded together with a sealing material. In addition, lines along which products are cut out from the bonded substrate are set on the bonded substrate and scribe lines are created in the two respective substrates along these lines along which products are cut out, and then a breaking process for applying stress along these scribe lines is carried out, and thus, products are cut out. These scribe lines include scribe lines for outlines created along the outline of products and auxiliary scribe lines created in an end material region between adjacent products in order to assist cutting.

Here, scribe lines created in a bonded substrate are described.

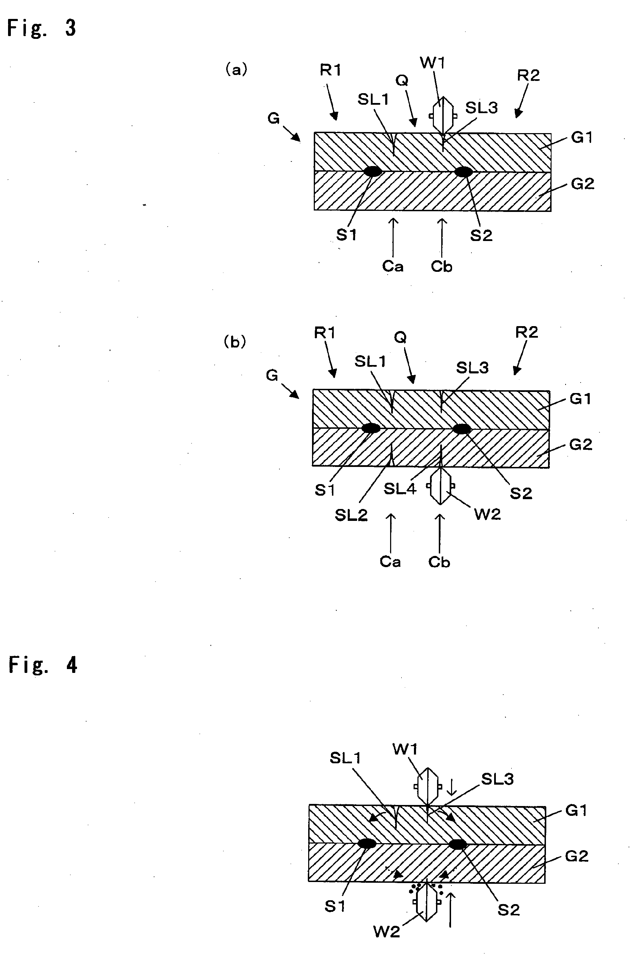

Figs 3(a) and 3(b) are schematic cross sectional diagrams showing a bonded substrate. In the bonded substrate G, a first substrate G1 and a second substrate G2 are secured to each other by means of a sealing material S1 and a sealing material S2.
Here, the scribe line SL1 created in the vicinity of the sealing material S1 provides a border Ca for a first product R1 on the left side of the border Ca, while the scribe line SL3 created in the vicinity of the sealing material S2 provides a border Cb for a second product R2 on the right side of the border Cb, and thus, the region sandwiched between the borders (between Ca and Cb) becomes an end material region Q.
Here, in the case where the products manufactured from the bonded substrate G include an end region made of electrode circuits, such as in a liquid crystal display panel, a terminal process for forming a terminal is carried out in some end material regions when each product is cut out. Here, through for the sake of simplicity, in the description a case where products are cut out so as to have the same end surfaces is described, products can be cut out in the same manner along scribe lines in the case where terminals are formed.

A process for creating a scribe line (hereinafter referred to as scribing process) in a concrete example according to the prior art is described below. First, as shown in Fig 3(a), scribe lines SL1 and SL3 are created along the borders Ca and Cb on one substrate (here, the first substrate G1) using a scribing wheel W1 in accordance with a scribing process.
Next, after all of the scribe lines are created for the first substrate G1, scribe lines SL2 and SL4 are created along the borders Ca and Cb on the other substrate (here, the substrate G2) using a scribing wheel W2, as shown in Fig 3(b).

When scribe lines are created through the above described procedure, however, creation of scribe lines in the second substrate G2 in a later process becomes unstable, even when the second substrate G2 is attempted to be processed under the contact pressure conditions as for the first substrate G1.
Concretely, when the second substrate G2 is processed later under the same contact pressure conditions as for the first substrate G1, cracks created along the scribe lines SL2 and SL4 are shallower than cracks created in the first substrate G1. Thus, it is necessary to make the contact pressure applied to the second substrate G2 greater, in order to make the cracks processed in the two substrates G1 and G2 of the same depth. In the case where the contact pressure is increased and scribe lines in the first substrate G1 which are created first and scribe lines in the second substrate G2 which are created second are compared, there are many lateral cracks in the vicinity of the scribe lines in the second substrate G2, which are created second, which tend to cause defects along the cut, such as chipping of corners, scratches, recesses and splintering, as defined in the standard JIS R3202. Accordingly, it becomes difficult to create good scribe lines stably, and thus the quality of the products is lower at the end surfaces.

Therefore, an object of the present invention is to provide a scribing method according to which a good and stable scribing process can be carried out on the surface of the substrates on both sides of a bonded substrate when a scribing process is carried out in order to cut out products from a bonded substrate.

### [Means for Solving Problem]

The present invention was arrived at after finding out the causes for the scribing process on the second substrate, which is carried out second, being unstable, and provides a stable scribing process by taking appropriate measures. First, the causes for the scribing process on the second substrate, which is carried out second, being unstable are described.

Fig 4 is a schematic cross sectional diagram showing a bonded substrate. A first substrate G1 and a second substrate G2 are secured to each other by means of sealing materials S1 and S2. When scribe lines SL1 and SL3 are created on the first substrate G1 side using a scribing wheel W1, a force for spreading the substrate to the left and right is applied in the vicinity of the cracks created along the scribe lines SL1 and SL3. Meanwhile, the rear of the first substrate G1 is secured to the second substrate by means of the sealing materials S1 and S2. Therefore, the first substrate G1 bends so that the surface becomes convex, and at the same time, as a counteraction, the second substrate G2 bends so that the surface becomes concave.
When the scribing wheel W2 presses against the surface on the second substrate G2 side, contraction stress is applied on the surface of the second substrate G2, due to the effects of bending, and therefore, the scribing process is considered to become unstable. Therefore, according to the present invention, a process for removing contraction stress is carried out on the second substrate G2 side before a scribing process is carried out on the second substrate G2.

That is to say, in the case where a substrate to be processed is a brittle material substrate having a substrate structure where a first substrate and a second substrate are bonded together with a sealing material so that a number of products are formed in locations respectively including a sealing material in the substrate structure and an end material region is formed between adjacent products, in the method for scribing bonded substrates according to the present invention, which is provided in order to solve the above described problem, scribe lines are created in a first and second substrate along which products are cut out using a scribing wheel through the following steps.
(a) First, a scribe line to be used for cutting a product on a first substrate side is created in the first substrate.
(b) Next, a scribe line for releasing stress in the vicinity of the center of an end material region between adjacent products is created in the second substrate, separately from scribe lines used to cut products on the second substrate side.
(c) Next, a scribe line to be used for cutting a product on a second substrate side is created in the second substrate.
In addition to these steps (a), (b) and (c), a scribe line for releasing stress in the vicinity of the center of an end material region between adjacent products is created in the first substrate, separately from scribe lines used to cut out a product on the first substrate side before the step (a), after said step (a) or after said step (b).
Here, the "end material region" in the present invention is a portion of the glass substrate adjacent to products, which is to be discarded after the products are cut out from the glass substrate.

According to the present invention, after a scribe line used for cutting out a product on a first substrate side is created in the first substrate in the step (a), a scribe line for releasing stress is created in the center of the end material region between adjacent products in the second substrate in the step (b). This scribe line for releasing stress is created in a different location from the scribe line for cutting of the second substrate under such conditions that the contact pressure is high. Furthermore, a scribe line for releasing stress is created in the vicinity of the center of the end material region between adjacent products in the first substrate, separately from the scribe lines to be used for cutting out a product on the first substrate side, before the step (a), after the step (a), or after the step (b).
As a result, the scribe lines for releasing stress provided in the first substrate and the second substrate are not excellent, because horizontal cracks and cullets are caused, but they are created in such locations as not to affect the products, and thus cause no problem.
Thus, scribe lines for releasing stress are created in the first and second substrates, so that contracting stress is released from the second substrate. After that, scribe lines to be used for cutting out products on the second substrate side are created, and afterwards, scribe lines can be created under the same contact pressure conditions as for the first substrate, and the quality of processing can be kept the same as in the first substrate.

In the above described invention, the scribe lines for releasing stress may make cracks created by the scribe lines run deeper in the direction of the thickness of the substrate than the scribe lines used for cutting out products on the second substrate side.
As a result, the contraction stress on the second substrate side can be released without failure, and good scribe lines to be used for cutting out products on the second substrate side can be created stably.

### [Effects of the Invention]

According to the present invention, a stable scribing process can be carried out on the surface of the substrates on both sides of a bonded substrate without the substrate being affected by contraction stress when a scribing process for cutting out products from a bonded substrate is carried out.

### [Best Mode for Carrying Out the Invention]

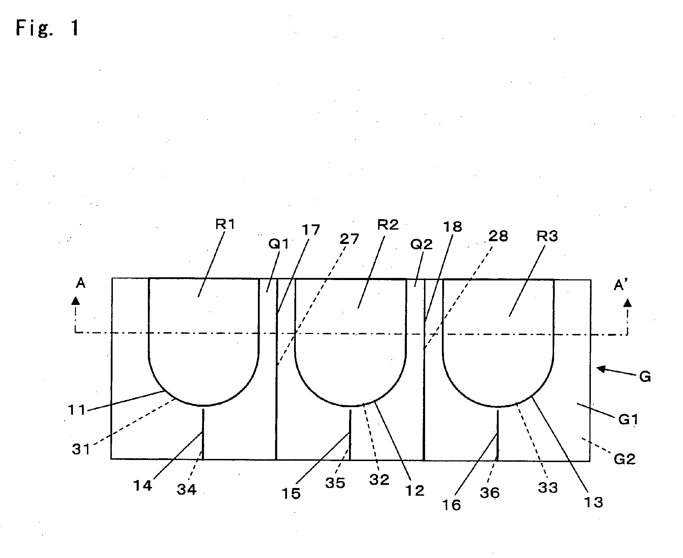

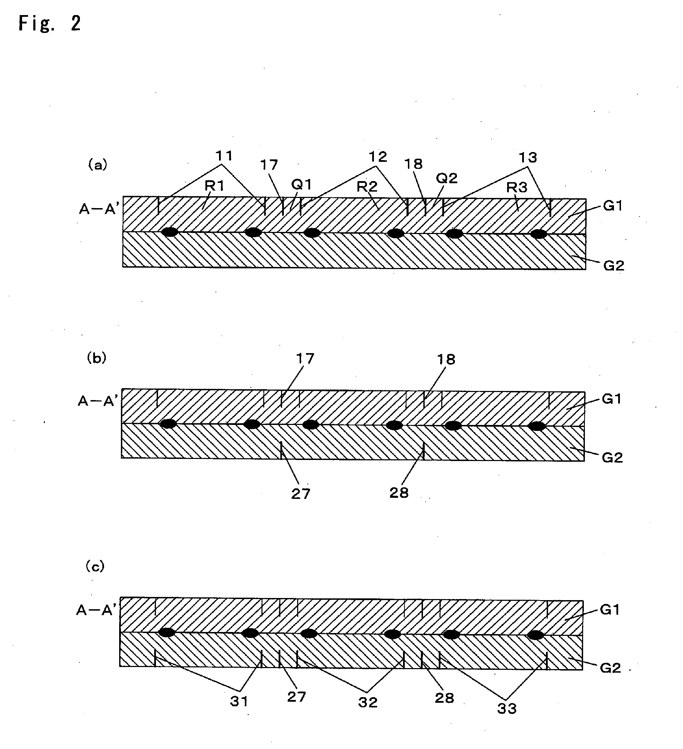

The scribing method according to an embodiment of the present invention is described below in reference to the drawings. Fig 1 is a plan diagram showing an example of a bonded substrate. Figs 2(a) to 2(c) are cross sectional diagrams along A-A' in Fig 1 illustrating the procedure for the scribing method according to the present invention, which can be implemented for the bonded substrate G in Fig 1.
The bonded substrate G is made of a first substrate G1 and a second substrate G2 which makes contact with the rear side of the first substrate G1. The first substrate G1 and the second substrate G2 face each other and have areas where products R1, R2 and R3 are to be created. End material regions Q1 and Q2 to be discarded after products are cut out are provided between adjacent products R1 and R2, as well as between products R2 and R3. The end material regions are used as a buffer region at the time of processing.

Scribe lines are created through the following procedure when products are cut out from the bonded substrate G.
First, as shown in Fig 2(a), scribe lines to be used for cutting out products R1 to R3 on the first substrate side are created in the first substrate G1. Concretely, scribe lines for outlines 11, 12 and 13, which become outlines for the products, and auxiliary scribe lines 14, 15 and 16 (see Fig 1), which lead cracks to the scribe lines for outlines so as to assist cutting are created. These scribe lines are created in the first substrate G1 so that the substrate G bends with the first substrate G1 side convex and the second substrate G2 side concave, in such a state that contraction stress is applied on the surface of the second substrate G2.
Next, scribe lines for releasing stress are created in the end material region of the first substrate G1. Concretely, linear scribe lines for releasing stress 17 and 18 are created in the vicinity of the center of the end material region provided between the products R1 and R2, as well as between the products R2 and R3, in different locations from the scribe lines for cutting out the products (vicinity of center of end material regions Q1 and Q2). Here, the scribe lines for releasing stress 17 and 18 and the scribe lines for outlines 11 to 16 to be used for cutting out products may be created in the opposite order in the first substrate G1 (here, the scribe lines for releasing stress 17 and 18 may be created after the below described scribe lines for releasing stress 27 and 28 in the second substrate G2).

Next, as shown in Fig 2(b), scribe lines for releasing stress are created in the end material region in the second substrate G2. Concretely, linear scribe lines for releasing stress 27 and 28 are created in such locations as to face the scribe lines for releasing stress 17 and 18 (in the vicinity of the center of the end material region Q1 and Q2 in the second substrate G2) in the vicinity of the center of the end material region provided between the products R1 and R2, as well as between the products R2 and R3. At this time, stronger contact stress than for creating the scribe line for outlines 11 and the like is applied. When scribe lines for releasing stress 27 and 28 are created, the contraction stress in the second substrate G2 caused by the substrate bending is released (as described above, at this point in time, when scribe lines for releasing stress 27 and 28 are created, scribe lines for releasing stress 17 and 18 may be created).

Next, as shown in Fig 2(c), scribe lines to be used for cutting products R1 to R3 on the second substrate G2 side are created in the second substrate G2. Concretely, scribe lines for outlines 31, 32 and 33 and auxiliary scribe lines 34, 35 and 36 (see Fig 1) are created. At this time, contraction stress is released from the second substrate G2, due to the scribe lines for releasing stress 17, 18, 27 and 28, and therefore, the scribing process can be carried out under the same contact pressure conditions as for the scribing process on the first substrate G1.

As described above, scribe lines for releasing stress 17, 18, 27 and 28 are created after scribing the first substrate G1, and after that, the second substrate G2 is scribed, so that a scribing process can be carried out on the first substrate G1 and the second substrate G2 under the same contact pressure conditions, and the quality of the created scribe lines can be kept the same.
Here, though it is desirable for the scribe lines for releasing stress 17, 18, 27 and 28 to be created from the end surface of each substrate, they may be created from approximately 1 mm inside the end surface of each substrate (so-called inner cutting).
The products R1 to R3 in the above described embodiment are merely examples, and there are no limitations in terms of their form, and products in such a form as to be closed only by a curve, or adjacent products having different forms, for example, fall within the scope of the present invention.

### [Industrial Applicability]

The scribing method according to the present invention can be used for scribing processes for a bonded substrate.

### [Brief Description of the Drawings]

Fig 1 is a diagram showing an example of a bonded substrate;
Figs 2(a) to 2(c) are diagrams showing the process procedure in accordance with the scribing method of the present invention;
Figs 3(a) and 3(b) are schematic cross sectional diagrams showing a bonded substrate; and
Fig 4 is a diagram showing the state of stress when a bonded substrate is scribed.

### [Explanation of Symbols]

- G: bonded substrate
- G1: first substrate
- G2: second substrate
- 11 to 13: scribe lines for outline
- 14 to 16: auxiliary scribe lines
- 17, 18: scribe lines for releasing stress
- 27, 28: scribe lines for releasing stress
- 31 to 33: scribe lines for outline
- 34 to 36: auxiliary scribe lines

### [Object]

To provide a scribing method according to which a stable scribing process can be carried out on the surface of the substrates which are bonded together with a sealing material on both sides.

### [Means for Achieving Object]

This object is achieved by a method having the features of claim 1.

## Claims

1. A method for scribing bonded substrates (G), where a substrate to be processed has a substrate structure where a first substrate (G1) and a second substrate (G2) are bonded together with a sealing material so that a number of products are formed in locations respectively including a sealing material in said substrate structure and an end material region is formed between adjacent products, according to which scribe lines are created in a first and second substrate along which products are cut out using a scribing wheel comprising the steps of:
(a) creating a scribe line (11,12,13) to be used for cutting a product on a first substrate (G2) side in the first substrate;
(b) next, creating a scribe (27,28) for releasing stress in the vicinity of the center of an end material region between adjacent products in the second substrate (G2) separately from scribe lines used to cut products on the second substrate side;
(c) next, creating a scribe line to be used for cutting a product on a second substrate side in the second substrate (31,32,33); and
creating a scribe line (17,18) for releasing stress in the vicinity of the center of an end material region between adjacent products in the first substrate separately from scribe lines used to cut out a product on the first substrate side before said step (a), after said step (a) or after said step (b).

2. The method for scribing bonded substrates according to Claim 1, wherein the scribe lines (27,28) for releasing stress in the second substrate (G2) make cracks created by the scribe lines run deeper in the direction of the thickness of the substrate than the scribe lines used for cutting out products on the second substrate side.

## Patentansprüche

1. Verfahren zum Anreißen von verbundenen Substraten (G), wobei ein zu verarbeitendes Substrat eine Substratstruktur aufweist, bei der ein erstes Substrat (G1) und ein zweites Substrat (G2) miteinander mit einem Versiegelungsmaterial verbunden sind, sodass eine Anzahl von Erzeugnissen an Orten ausgebildet ist, die jeweils ein Versiegelungsmaterial in der Substratstruktur beinhalten, und wobei ein Endmaterialbereich zwischen benachbarten Erzeugnissen ausgebildet wird, gemäß dem Anreißlinien in einem ersten und zweiten Substrat erzeugt werden, entlang denen Erzeugnisse unter Verwendung eines Anreißrades herausgeschnitten werden, das Verfahren umfasst die Schritte:
(a) Erzeugen einer Anreißlinie (11, 12, 13) in dem ersten Substrat, die zum Schneiden eines Erzeugnisses auf Seiten des ersten Substrates (G2) zu verwenden ist;
(b) nachfolgend Erzeugen einer Anreißlinie (27, 28) zum Auflösen von Verspannung in der Umgebung des Zentrums eines Endmaterialbereichs zwischen benachbarten Erzeugnissen in dem zweiten Substrat (G2) separat von den zum Schneiden von Erzeugnissen auf Seiten des zweiten Substrates verwendeten Anreißlinien;
(c) nachfolgend Erzeugen einer zum Schneiden eines Erzeugnisses auf Seiten eines zweiten Substrates zu verwendenden Anreißlinie in dem zweiten Substrat (31, 32, 33); und
Erzeugen einer Anreißlinie (17, 18) zum Auflösen von Verspannung in der Umgebung des Zentrums eines Endmaterialbereichs zwischen benachbarten Erzeugnissen in dem ersten Substrat separat von zum Herausschneiden eines Erzeugnisses auf Seiten des ersten Substrates verwendeten Anreißlinien vor dem Schritt (a), nach dem Schritt (a) oder nach dem Schritt (b).

2. Verfahren zum Anreißen von verbundenen Substraten nach Anspruch 1, wobei die Anreißlinien (28, 29) zum Auflösen von Verspannung in dem zweiten Substrat (G2) die durch die Anreißlinien erzeugten Risse in der Dickenrichtung des Substrates tiefer verlaufen lässt als die zum Herausschneiden von Erzeugnissen auf Seiten des zweiten Substrates verwendeten Anreißlinien.

## Revendications

1. Procédé pour le traçage de rayures sur des substrats liés (G), où un substrat à traiter a une structure de substrat où un premier substrat (G1) et un deuxième substrat (G2) sont liés ensemble par un matériau d'étanchéité de sorte qu'un certain nombre de produits soient formés dans des endroits respectivement comportant un matériau d'étanchéité dans ladite structure de substrat et qu'une zone de matériau d'extrémité soit formée entre les produits adjacents, selon lesquels des lignes de découpe sont créées dans des premier et deuxième substrats le long desquelles des produits sont découpés en utilisant une roue de traçage, comprenant les étapes qui consistent à :
(a) créer une ligne de découpe (11, 12, 13) devant être utilisée pour découper un produit sur un côté de premier substrat (G1) dans le premier substrat ;
(b) créer, ensuite, une ligne de découpe (27, 28) permettant de détendre une contrainte au voisinage du centre d'une zone de matériau d'extrémité entre des produits adjacents dans le deuxième substrat (G2) séparément des lignes de découpe utilisées pour découper des produits sur le côté de deuxième substrat ;
(c) créer, ensuite, une ligne de découpe (31, 32, 33) devant être utilisée pour découper un produit sur un côté de deuxième substrat dans le deuxième substrat ; et
créer une ligne de découpe (17, 18) permettant de détendre une contrainte au voisinage du centre d'une zone de matériau d'extrémité entre des produits adjacents dans le premier substrat séparément des lignes de découpe utilisées pour découper un produit sur le côté de premier substrat avant ladite étape (a), après ladite étape (a) ou après ladite étape (b).

2. Procédé pour le traçage de rayures sur des substrats liés selon la revendication 1, dans lequel les lignes de découpe (27, 28) permettant de détendre une contrainte dans le deuxième substrat (G2) rendent des fissures créées par les lignes de découpe plus profondes dans la direction de l'épaisseur du substrat que les lignes de découpe utilisées pour découper des produits sur le côté de deuxième substrat.
